Europäisches Patentamt

European Patent Office

Office européen des brevets

(19)

(11) Veröffentlichungsnummer: **0 042 091 B1**

(12) **EUROPÄISCHE PATENTSCHRIFT**

(45) Veröffentlichungstag der Patentschrift:
16.01.85

(51) Int. Cl.⁴: **C 08 L 27/06, C 08 L 51/04**

(21) Anmeldenummer: 81104161.5

(22) Anmeldetag: 01.06.81

(54) **Kerbschlagzähe Vinylchloridpolymerisate.**

(30) Priorität: 14.06.80 DE 3022469

(43) Veröffentlichungstag der Anmeldung:
23.12.81 Patentblatt 81/51

(45) Bekanntmachung des Hinweises auf die Patenterteilung:
16.01.85 Patentblatt 85/3

(84) Benannte Vertragsstaaten:
BE CH DE FR GB IT LI NL SE

(56) Entgegenhaltungen:
GB - A - 1 039 802
US - A - 3 644 249
US - A - 3 907 928
US - A - 3 994 991

(73) Patentinhaber: BAYER AG, Konzernverwaltung RP
Patentabteilung, D-5090 Leverkusen 1 Bayerwerk (DE)

(72) Erfinder: Lindner, Christian, Dr., Riehler Strasse 200,
D-5000 Köln 60 (DE)
Erfinder: Braese, Hans-Eberhard, Ing.-grad.,
Käthe-Kollwitz-Strasse 3, D-5000 Köln 71 (DE)
Erfinder: Ott, Karl-Heinz, Dr., Paul-Klee-Strasse 54,
D-5090 Leverkusen 1 (DE)

## Beschreibung

Die Erfindung betrifft kerbschlagzähe thermoplastische Formmassen aus einem Vinylchloridpolymerisat und teilchenförmigen Pfropfcopolymerisaten. Thermoplastische Pfropfcopolymerisate enthaltende Vinylchloridpolymerisat-Formmassen sind bekannt. So werden gemäss DE-OS 2 010 633 gepfropfte Butadienkautschuke (ABS-Polymerisate) zur Modifizierung von Polyvinylchlorid verwendet. Solche Polymermischungen sind wegen ihrer hohen Gehalte an Dienkautschuk nicht bewitterungsstabil. Modifikatoren für Polyvinylchlorid auf Acrylatkautschukbasis (vgl. DE-AS 2 503 390 oder GB-PS 1 002 813) verbessern zwar das Alterungsverhalten, aber die Materialeigenschaften bei tiefen Temperaturen und die Verarbeitbarkeit sind unzureichend. Beispielsweise lassen sich diese Modifikatoren schlecht in Vinylchloridpolymerisaten dispergieren, so dass sich ihre modifizierenden Eigenschaften nicht voll auswirken können.

Der Erfindung liegt die Erkenntnis zugrunde, dass man mit Hilfe bestimmter teilchenförmiger Pfropfcopolymerisate aus Vinylchloridpolymerisaten Formmassen gewinnen kann, die im Vergleich zu Polydiene enthaltenden analogen Massen gute Alterungsbeständigkeit und im Vergleich zu analogen, Polyacrylate enthaltenden Massen verbesserte Eigenschaften bei tiefen Temperaturen besitzen. Die speziellen Pfropfpolymerisate dispergieren leicht in Vinylchloridpolymerisaten.

Gegenstand der Erfindung sind somit kerbschlagzähe thermoplastische Formmassen aus

1) 1,0 bis 99 Gew.-% eines thermoplastischen Vinylchloridpolymerisats und
2) 99,0 bis 1,0 Gew.-% eines teilchenförmigen Pfropfpolymerisats aus einem Kern (a), der einen stark vernetzten Dienkautschuk darstellt, einer ersten Hülle (b), die einen vernetzten Acrylatkautschuk darstellt, und einer zweiten Hülle (c), die ein Polymerisat oder Copolymerisat aus harzbildenden Monomeren aus der Reihe (α-Methyl)Styrol, (Meth)Acrylnitril und/oder (Meth) Acrylsäureester darstellt, wobei das Gewichtsverhältnis (a):(b) = 0,1:99,9 bis 80:20 und der Anteil von (c) am gesamten Pfropfprodukt 90 bis 20 Gew.-% ist, und gegebenenfalls nicht gepfropftes Polymerisat oder Copolymerisat (c) sowie übliche Additive.

Die U.S.-Patentschrift 3 994 991 lehrt bereits ein Gemisch aus Polyvinylchlorid und einem in zwei Stufen hergestellten Pfropfpolymerisat. Dieses hat als Pfropfbasis ein vernetztes Polyalkylacrylat (das evtl. bis zu 20% weiterer Monomerer einpolymerisiert enthält), das kautschukartig sein kann.

In erster Stufe werden darauf gepfropft:

ein Gemisch aus 30 bis 100 Gew.-% Alkylmethacrylat, 0 bis 70 Gew.-% Vinylaromat (z.B. Styrol), 0 bis 50% Vinylcyanid (Acrylnitril), und 0 bis 30% eines weiteren Monomeren (dessen Definition Acrylnitril ausschliesst). Es sind bei den Monomeren also nur Methacrylate (typischerweise Methylmethacrylat) zugelassen, und diese führen alleine oder bei Copolymerisation mit den anderen angegebenen Monomeren nicht zu Kautschuken, sondern zu spröden Thermoplasten.

In zweiter Stufe werden dann 85 bis 100% aromatische Vinylverbindung (Styrol), Alkylacrylat (gemäss Beispiel 3 Butylacrylat), Vinylester und 0 bis 15% anderer Monomerer aufgepfropft (die anderen Monomeren sind wie oben definiert, Acrylnitril ist also ausgeschlossen). Diese zweite Pfropfhülle besteht aus einem Thermoplasten (z.B. Polystyrol) oder aus einem Kautschuk, z.B. Poly-n-Butylacrylat).

Der Aufbau des Produktes ist also Kern: elastisch; 1. Hülle: hart (thermoplastisch); 2. Hülle: hart (thermoplastisch) oder elastisch.

Die britische Patentschrift 1 039 802 lehrt, auf Polybutadien in einer ersten Stufe alleine Styrol und in einer zweiten Stufe alleine Methylmethacrylat aufzupfropfen (vergl. Seite 1, Zeile 88 bis Seite 2, Zeile 8). Es werden also hier zwei thermoplastische Hüllen auf den Polybutadienkautschuk aufgebracht. Es liegt auch wieder vor ein elastischer Kern, eine thermoplastische 1. Hülle, und eine thermoplastische 2. Hülle, also ein Aufbau, der mit dem der U.S.-Patentschrift 3 994 991 vergleichbar ist.

In der U.S.-Patentschrift 3 644 249 ist die Basis des Pfropfpolymerisats ein Terpolymerisat aus Butadien, N-Butylacrylat und Styrol. In erster Stufe wird Methylmethacrylat und in zweiter Stufe Styrol aufgepfropft. Es handelt sich also wieder um den gleichen prinzipiellen Aufbau.

Das erfindungsgemässe Produkt hat dagegen den Aufbau: Kern: elastisch; 1. Hülle: elastisch; 2. Hülle: hart (thermoplastisch).

Vinylchlorid-Polymerisate im Sinne der Erfindung sind insbesondere Polyvinylchlorid, Copolymerisate des Vinylchlorids mit bis zu 20 Gew.-% copolymerisierbaren Verbindungen, sowie Pfropfpolymerisate von Vinylchlorid auf Ethylen/Vinylacetat-Copolymerisate (insbesondere mit Vinylchloridgehalten von 40–60 Gew.-%). Mit Vinylchlorid copolymerisierbare Verbindungen sind z.B.

a) Vinylester mit 1–8 C-Atomen im Alkylrest der Carbonsäure;
b) Vinylether mit 3–7 C-Atomen;
c) Maleinsäureanhydrid;
d) Halbester der Maleinsäure mit aliphatischen Alkoholen mit 1–8 C-Atomen im Alkoholrest;
e) Diester der Maleinsäure mit aliphatischen Alkoholen mit 1–8 C-Atomen im Alkoholrest.

Das Gewichtsverhältnis des Kerns (a) und der ersten Hülle (b) ist 0,1 zu 99,9 bis 80 zu 20, bevorzugt 10 zu 90 bis 50 zu 50, und der Anteil von (c) am gesamten Pfropfpolymerisat 90 bis 20, bevorzugt 80 bis 50 Gew.-%. Die Pfropfpolymerisate haben mittlere Teilchendurchmesser ($d_{50}$) von 0,05 bis 20 μ, bevorzugt 0,1 bis 3 μ. Besonders bevorzugte Teilchendurchmesser sind 0,1 bis 1 μ.

Das Material des Kerns (a) ist ein vernetzter Kautschuk aus einem oder mehreren konjugierten Dienen, wie Butadien, oder ein Copolymerisat eines konjugierten Diens mit einem ethylenisch ungesättigten Monomer wie Styrol und/oder Acrylnitril.

Die erste Hülle (b) stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$–$C_8$-Alkylester, beispielsweise Methyl-, Ethyl-, Butyl-, Octyl- und 2-Ethylhexylester, Halogenalkylester, bevorzugt $C_1$–$C_8$-Halogenalkylester, wie Chlorethylacrylat, und aromatische Ester wie Benzylacrylat und Phenethylacrylat. Sie können einzeln oder in Mischung eingesetzt werden, wobei mindestens ein Alkylester im Gemisch vorhanden sein soll. Zur Vernetzung werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat, Divinylverbindungen wie Divinylbenzol, Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat, Ethylenglykoldimethacrylat und 1,3,5-Triacryloylhexahydro-s-triazin.

Die Menge der zur Vernetzung benutzten polyfunktionellen Monomeren ist bevorzugt 0,05 bis 10 Gew.-%, insbesondere 0,1 bis 5,0 Gew.-%, der Masse der ersten Hülle (b). Das Elastomer der ersten Hülle (b) kann zusätzlich noch ein copolymerisierbares Monomeres oder mehrere solcher Monomeren vom Vinyl- oder Vinylidentyp einpolymerisiert enthalten. Beispiele sind: Methylmethacrylat, Butylacrylat, Acrylnitril, Styrol, α-Methylstyrol, Acrylamide, Vinylalkylether. Diese Comonomeren können in Mengen bis zu 50 Gew.-% des Polymerisates (b) einpolymerisiert werden.

Die zweite Hülle (c) stellt bevorzugt ein pfropfpolymerisiertes Polymerisat aus α-Methylstyrol, Styrol, Acrylnitril, Methylmethacrylat oder ein Mischpolymerisat dieser Monomeren dar, besonders bevorzugt sind Copolymerisate aus Styrol und Acrylnitril im Gewichtsverhältnis 90:10 bis 50:50 sowie Polymethylmethacrylat.

Die teilchenförmigen Pfropfcopolymerisate können in wässriger Emulsion wie folgt hergestellt werden:

Zunächst wird durch Emulsionspolymerisation eines konjugierten Diens der Dienkautschuk für den Kern (a) in Latexform hergestellt. Die Polymerisation ist bekannt. Dann wird in Gegenwart des Dienkautschuklatex, ebenfalls in wässriger Emulsion, der Acrylatkautschuk für die erste Hülle hergestellt, indem man die Monomeren (Hauptbestandteil wenigstens ein Acrylat) in dem Latex emulgiert und in an sich bekannter Weise an radikalbildende Initiatoren polymerisiert. Der Acrylatkautschuk polymerisiert auf den Dienkautschuk. Er wird durch Mitverwendung polyfunktioneller Monomerer bereits bei der Herstellung vernetzt.

Bei dieser Pfropfpolymerisation der ersten Hülle (b) muss die Bildung neuer Teilchen möglichst vollständig unterbunden werden. Ein Emulsionsstabilisator muss in einer zur Oberflächenbedeckung der Teilchen erforderlichen Menge vorhanden sein. Die Grösse dieser Teilchen ist durch die Reaktionsführung in weiten Grenzen zu variieren. Verwendet man als Kern (a) einen agglomerierten Latex, um grosse Teilchen zu erhalten, so können diese mehrere Dienkautschukpartikel enthalten. Man kann die Polymerisation der ersten Hülle (b) auch so führen, dass Partikel mit Dienkautschukkern und gleichzeitig Partikel aus reinem vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks wird auf den erhaltenen Latex ein Vinylmonomer oder ein Gemisch aus Vinylmonomeren in Emulsion polymerisiert. Dabei bilden sich Pfropfpolymerisate unter Ausbildung der zweiten Hülle (c). Bei dieser an sich bekannten Pfropfpolymerisation, die üblicherweise in Gegenwart von Radikalstartern, z.B. wasserlöslichen Initiatoren, Emulgatoren oder Komplexbildner/Pfropfaktivatoren, sowie Reglern durchgeführt wird, bilden sich im allgemeinen neben dem Pfropfpolymerisat in bestimmtem Ausmass freie Polymerisate bzw. Copolymerisate der die zweite Hülle (c) bildenden Monomeren. Die Menge dieses ungepfropften Polymerisates kann durch den Pfropfgrad bzw. die Pfropfausbeute charakterisiert werden, sie hängt ab u.a. von den Polymerisationsbedingungen, der Zusammensetzung der ersten Hülle (b), der Grösse der zu pfropfenden Teilchen, und der Menge an gepfropftem Acrylatkautschuk. «Pfropfpolymerisat» im Sinne der Erfindung ist deshalb das durch Polymerisation von Vinylmonomeren in Gegenwart des Kautschuklatex erhaltene Produkt, genau genommen also ein Gemisch aus Pfropfpolymerisat und freiem Copolymerisat der Pfropfmonomeren, unabhängig vom Pfropfgrad.

Die so hergestellten Pfropfpolymerisate können nach bekannten Verfahren aufgearbeitet werden, z.B. durch Koagulation der Latices mit Elektrolyten (Salze, Säuren oder Gemische davon) und anschliessende Reinigung und Trocknung oder durch sogenannte Sprühtrocknung.

Vorzugsweise enthalten die erfindungsgemässen Formmassen bis 50 Gew.-% an teilchenförmigen Pfropfcopolymerisaten, besonders bevorzugt bis 25 Gew.-%; statt der reinen teilchenförmigen Pfropfcopolymerisate können auch Mischungen aus teilchenförmigen Pfropfcopolymerisaten mit Copolymerisaten der Pfropfmonomeren (der Schale (c)) verwendet werden.

Zur Herstellung der erfindungsgemässen Formmassen kann man a) Latices von Vinylchloridpolymerisaten mit Latices der teilchenförmigen Pfropfcopolymerisate vermischen und anschliessend gemeinsam koagulieren, oder man kann b) das isolierte Vinylchloridharz mit den aus der wässrigen Emulsion isolierten Pfropfcopolymerisaten im thermoplastischen Zustand vermischen.

Für das Mischen, Aufbereiten bzw. Compoundieren sind z.B. übliche Schnellmischer und Walzwerke geeignet. Man kann dazu beispielsweise von pulverförmigem Material ausgehen oder erst granulieren. Die auf Walzen oder Knetern plastifizierten Massen können auch verpresst oder kalandriert werden. Pulvermischungen und Granulate lassen sich nach bekannten Methoden extrudieren, verspritzen oder verblasen.

Die erfindungsgemässen Formmassen können übliche PVC-Stabilisatoren enthalten, d.h. Stabilisierungssysteme auf der Basis Blei, Barium/Cadmium, Calcium/Zink, zinnorganische Verbindungen oder organische Stabilisatoren wie beispielsweise α-Phenylindol, Diphenyl-Thioharnstoff, α-Aminokrotonsäureester, epoxidierte Fettsäureester allein oder in Kombination. Auch Gleitmittel für Polyvinylchlorid können zugesetzt werden.

Den Formmassen können Polymer- und Monomerweichmacher einzeln oder in Kombination zugefügt werden, sowie physikalische oder chemische Treibmittel, um unter geeigneten Verarbeitungsbedingungen eine Schaumstruktur zu erzielen.

Der Zusatz von üblichen Verarbeitungs- und Fliessmitteln ist ebenso wie bei der Verarbeitung von reinem oder schlagfesten Polyvinylchlorid möglich. Antistatika, UV-Absorber, Antioxidantien, Flammschutzmittel, Farbpigmente und Füllstoffe können ebenfalls eingesetzt werden.

Ausserdem können die erfindungsgemässen Formmassen andere bekannte Schlagzähigkeitsmodifikatoren zusätzlich enthalten, wie z.B. Ethylen/Vinylacetatpolymerisate, chlorierte Polyolefine, ABS- bzw. MBS-Polymerisate oder bekannte Acrylatmodifikatoren.

Die erfindungsgemässen Formmassen werden in erster Linie zur Herstellung von Profilen und extrudierten Platten verwendet, sowie für Spritzgussartikel, Einsatzgebiete für Profile finden sich vor allem im Bau- und Möbelsektor; beispielhaft seien genannt: Fensterprofile, Türrahmen, Balkonverkleidungen oder ähnliches. Nach dem Spritzgussverfahren können z.B. Haushaltsartikel, Kleinteile für die Fahrzeugindustrie oder z.B. Möbelteile gefertigt werden. Einsatzgebiete für kalandrierte Folien sind z.B. der Verpackungssektor sowie der Verkleidungsmaterialsektor.

Ausführungsbeispiele
Herstellung der Pfropfpolymerisate
1. Herstellung der Polydienlatices (Kern (a))
1.1. In einem Reaktor wird unter Rühren folgende Emulsion bei 65 °C bis zum praktisch vollständigen Monomerumsatz innerhalb von ca. 22 Stunden polymerisiert:

90,0 Gew.-Teile Butadien
10,0 Gew.-Teile Styrol
1,8 Gew.-Teile Na-Salz der disproportionierten Abietinsäure
0,257 Gew.-Teile Natriumhydroxid
0,3 Gew.-Teile n-Dodecylmercaptan
1,029 Gew.-Teile Na-ethylendiamintetraacetat
0,023 Gew.-Teile Kaliumpersulfat
176 Gew.-Teile Wasser

Es wird ein Latex erhalten, der Butadien/Styrol-Copolymerisatteilchen eines mittleren Durchmessers ($d_{50}$) von 0,1 μ in einer Konzentration von ca. 35–36% enthält.

1.2. Nach Vorschrift 1.1.1. wird bei 60–68 °C innerhalb von ca. 110 Stunden folgende Emulsion polymerisiert:

100,0 Gew.-Teile Butadien
70 Gew.-Teile Wasser
1,146 Gew.-Teile Na-Salz der disproportionierten Abietinsäure
0,055 Gew.-Teile ethylendiamintetraessigsaures Na
0,137 Gew.-Teile Natriumhydroxid
0,028 Gew.-Teile Natriumhydrogencarbonat
0,282 Gew.-Teile Kaliumpersulfat

Es wird ein Latex erhalten, der Polybutadienteilchen eines mittleren Durchmessers ($d_{50}$) von 0,4 μ in einer Konzentration von ca. 58% enthält.

2. Herstellung von Acrylatkautschukteilchen, die Polybutadienkerne enthalten (Kern (a) mit 1 Hülle (b))

2.1. In einem Reaktor wird unter Rühren bei 65 °C folgende Mischung vorgelegt:
46 Gew.-Teile Latex 1.1.1.
2800 Gew.-Teile Wasser
8 Gew.-Teile Kaliumpersulfat

Innerhalb von 4 Stunden wurden bei 65 °C folgende Mischungen in den Reaktor getrennt eindosiert:

Mischung A:
3013 Gew. Teile n-Butylacrylat
6,2 Gew.-Teile Triallylcyanurat

Mischung B:
2760 Gew.-Teile Wasser
41 Gew.-Teile Na-Sulfonat von $C_{14}$–$C_{18}$ Kohlenwasserstoffen.

Anschliessend lässt man 4 Stunden bei 65 °C auspolymerisieren. Die gebildeten Polymerisate besitzen Gelgehalte von 85–95 Gew.-%, Quellungsgrade von 5–9 und mittlere Teilchendurchmesser von 0,4 μ.

2.2. In einem Reaktor werden bei 65 °C vorgelegt:
2168 Gew.-Teile Latex 1.1.2.
9500 Gew.-Teile Wasser
27 Gew.-Teile Kaliumpersulfat
1700 Gew.-Teile Wasser

Innerhalb von 4 Stunden wurden bei 65 °C folgende Mischungen in den Reaktor getrennt eindosiert:

Mischung A:
9214 Gew.-Teile n-Butylacrylat
  15 Gew.-Teile Triallylcyanurat
Mischung B:
6600 Gew.-Teile Wasser
 156 Gew.-Teile Na-Sulfonat von $C_{14}$–$C_{18}$ Kohlen-
        wasserstoffatomen.

Anschliessend lässt man 4 Stunden bei 65°C auspolymerisieren. Die gebildeten Polymerisate besitzen Gelgehalte von 91 Gew.-%, Quellungsgrade von 6,5 und eine breite Kautschukverteilung von 0,2–0,9 µ.

3. Herstellung der Pfropfcopolymerisate
Allgemeine Vorschrift
In einem Reaktor werden vorgelegt und auf 65°C aufgeheizt:

a) Gew.-Teile Latex
Es wird initiiert mit einer Mischung aus
b) Gew.-Teile Kaliumpersulfat
c) Gew.-Teile Wasser
Innerhalb von 4 Stunden lässt man bei 65°C folgende Mischungen unter Rühren in den Reaktor einlaufen:

Mischung A:
d  Gew.-Teile Monomer 1
e  Gew.-Teile Monomer 2

Mischung B:
f  Gew.-Teile Wasser
g  Gew.-Teile Na-Sulfonat von $C_{14}$–$C_{18}$ Kohlen-
    wasserstoffen.

Tabelle 1 (Gew.-Teile)

| a/Latex | b | c | d | e | f | g |
|---|---|---|---|---|---|---|
| 3.1 3088/1.2.1. | 3,5 | 145 | 273 MAM | – | 880 | 5 |
| 3.2. 3088/1.2.1. | 3,5 | 145 | 76,4 AN | 196,6 S | 880 | 5 |
| 3.3. 13 000/1.2.2. | 18 | 1400 | 311 AN | 799 S | 1200 | 22 |

MAM = Methylmethacrylat
AN  = Acrylnitril
S   = Styrol

Anschliessend wird 4 Stunden bei 65°C ausgepolymerisiert.

Die Pfropfpolymer-Latices 1.3.1.–1.3.3. werden nach Zugabe einer wässrigen Stabilisatordispersion, entsprechend 0,25– 1 Gew.-Teil eines phenolischen Antioxidants per 100 Gew.-Teile Latex-Feststoff, durch Elektrolyt- bzw. Säurezusatz koaguliert. Die resultierenden Pulver werden bei 70°C im Vakuum getrocknet.

4. Erfindungsgemässe Formmassen
Formmassen aus X Gew.-Teilen Polyvinylchlorid (mit einem K-Rest von 70[1]), Y Gew.-Teilen

eines Modifikators der Tabelle 1 lassen sich einwandfrei verarbeiten. Als Stabilisator- und Gleitmittelkombination werden 1 Gew.-% Ba/Cd-Laurat (fest) und 0,2 Gew.-% Esterwachs (Esterungspunkt 70–74°C) zugesetzt. Die Formmassen wurden auf einem Mischwalzwerk innerhalb von 10 min. bei 180°C hergestellt und daraus bei 190°C Prüfkörper gepresst. Die folgende Tabelle 2 erläutert die hergestellte Mischung und zeigt einige vorteilhafte physikalische Eigenschaften.

[1] Zur Definition des K-Wertes siehe: H.F., Zeitschrift für Zellulose-Chemie 13 (1932), Seite 58

Tabelle 2

| Beispiel | PVC Gew.-Tl. | Modifikator Typ | Gew.-Tl. | Kugeldruck-härte DIN 53 456 (MPa 30″) | Schlagzähigkeit DIN 53 453 kJ/m² R.T. | –20°C | Kerbschlagzähigkeit DIN 53 453 kJ/m² R.T. | ±0°C | Formbeständigkeit in der Wärme Vicat B (°C) DIN 53 460 |
|---|---|---|---|---|---|---|---|---|---|
| 4.1. | 90 | 3.1. | 10 | 83,2 | n.g.[1] | n.g. | 44 | 5,5 | 80 |
| 4.2. | 87,5 | 3.1. | 12,5 | 73,6 | n.g.[1] | n.g. | 69,5 | 8,1 | 78 |
| 4.3. | 90 | 3.2. | 10 | 84,6 | n.g.[1] | n.g. | 46,7 | 6,6 | 80 |
| 4.4. | 87,5 | 3.2. | 12,5 | 76,0 | n.g.[1] | n.g. | 58,6 | 8,5 | 79 |
| 4.5. | 95 | 3.3. | 5 | 101,5 | n.g.[1] | n.g. | 6 | 5 | – |
| 4.6. | 92,5 | 3.3. | 7,5 | 93,5 | n.g.[1] | n.g. | 8 | 5 | – |
| 4.7. | 90 | 3.3. | 10 | 86,5 | n.g.[1] | n.g. | 21 | 7,5 | – |
| 4.8. | 87,5 | 3.3. | 12,5 | 77,3 | n.g.[1] | n.g. | 32 | 11 | – |

1) n.g. = nicht gebrochen

## Patentansprüche

1. Kerbschlagzähe, thermoplastische Formmassen, enthaltend
1) 1,0 bis 99 Gew.-% eines thermoplastischen Vinylchloridpolymerisats und
2) 99,0 bis 1,0 Gew.-% eines teilchenförmigen Pfropfpolymerisats aus einem Kern (a), der einen stark vernetzten Dienkatuschuk darstellt, einer ersten Hülle (b), die einen vernetzten Acrylatkautschuk darstellt, und einer zweiten Hülle (c), die ein Polymerisat oder Copolymerisat aus harzbildenden Monomeren aus der Reihe (α-Methyl)Styrol, (Meth)Acrylnitril und/oder (Meth)Acrylsäureester darstellt, wobei das Gewichtsverhältnis (a):(b) = 0,1:99,9 bis 80:20 und der Anteil von (c) am gesamten Pfropfprodukt 90 bis 20 Gew.-% ist, und gegebenenfalls nicht gepfropftes Polymerisat oder Copolymerisat (c) sowie übliche Additive.

2. Thermoplastische Formmasse nach Anspruch 1, enthaltend
1) 70 bis 98 Gew.-% Polyvinylchlorid,
2) 30 bis 1 Gew.-% eines teilchenförmigen Pfropfpolymerisats aus (a) vernetztem Polybutadienkautschuk, einer ersten Hülle (b) aus einem mit Trialkylcyanurat vernetzten n-Alkylacrylat-Kautschuk, und (c) einem Copolymerisat aus Styrol und Acrylnitril, wobei das Gewichtsverhältnis von (a):(b) = 10:90 bis 50:50, und der Anteil von (c) am gesamten Pfropfprodukt 80 bis 50 Gew.-% ist.

## Claims

1. Notch impact resistant thermoplastic moulding compositions containing
1) 1.0 to 99 % by weight of a thermoplastic vinyl chloride polymer and
2) 99.0 to 1.0 % by weight of a particulate graft polymer consisting of a core (a) which is a highly cross-linked diene rubber, a first shell (b) which is a cross-linked arcylate rubber, and a second shell (c) which is a polymer or copolymer of resin-forming monomers from the series comprising (α-methyl)styrene, (meth)acrylonitrile and/or (meth)acrylic acid ester, the ratio by weight of (a):(b) being 0.1:99.9 to 80:20 and the proportion of (c) in the total graft product being 90 to 20% by weight, and optionally non-grafted polymer or copolymer (c) as well as customary additives.

2. Thermoplastic moulding composition according to Claim 1, containing
1) 70 to 98 % by weight of polyvinyl chloride,
2) 30 to 1 % by weight of a particulate graft polymer consisting of (a) cross-linked polybutadiene rubber, a first shell (b) of an n-alkyl acrylate cross-linked with trialkyl cyanurate, and (c) a copolymer of styrene and acrylonitrile, the ratio by weight of (a):(b) being 10:90 to 50:50 and the proportion of (c) in the total graft product being 80 to 50% by weight.

## Revendications

1. Masses de moulage thermoplastiques résilientes, contenant
1) 1,0 à 99 % en poids d'un polymère de chlorure de vinyle thermoplastique et
2) 99,0 à 1,0 % en poids d'un polymère greffé sous la forme de particules consistant en un noyau (a), constitué par un caoutchouc diènique fortement réticulé, en une première enveloppe (b), constituée par un caoutchouc d'acrylate réticulé, et en une deuxième enveloppe (c), constituée par un polymère ou copolymère de monomères résinogènes de la série de l' (α-méthyl)styrène, du (méth)acrylonitrile et/ou d'un ester d'acide (méth)acrylique, le rapport pondéral (a):(b) étant de 0,1 à 99,9 jusqu'à 80:20 et la proportion de (c) par rapport au produit greffé total étant de 90 à 20% en poids, et éventuellement par un polymère ou copolymère (c) non greffé de même que par des additifs usuels.

2. Masses de moulage thermoplastiques selon la revendication 1, contenant:
1) 70 à 98 % en poids de chlorure de polyvinyle,
2) 30 à 1 % en poids d'un polymère greffé en la forme de particules au départ (a) de caoutchouc de polybutadiène réticulé, d'une première enveloppe (b) en un caoutchouc d'acrylate de n-alcoyle réticulé avec un cyanurate de trialcoyle, et (c) d'un copolymère de styrène et d'acrylonitrile, le rapport pondéral de (a):(b) étant de 10:90 à 50:50, et la proportion de (c) par rapport au produit greffé total étant de 80 à 50% en poids.